# EUROPEAN PATENT APPLICATION

(11) **EP 3 125 133 A1**
(43) Date of publication of application: **01.02.2017**
(21) Application number: 15202641.5
(22) Date of filing: 23.12.2015
(51) Int. Cl.: G06F 17/30

(54) **SYSTEM AND METHOD FOR GENERATING VERIFIABLE QUERY OF SEMANTIC DATA**

(30) Priority: 30.07.2015 IN 3914CH2015; 21.09.2015 US 201514859584
(71) Applicant: Wipro Limited, 560 035 Karnataka (IN)
(72) Inventor: KUMAR, Shishir, 800025 Bihar (IN)
(74) Representative: Finnegan Europe LLP

(57) **Abstract**

This disclosure relates generally to information retrieval, and more particularly to a system and method for verifiable query of semantic data. In one embodiment, a method is provided for performing verifiable query on semantic data. The method comprises rendering a visualization of an ontology of the semantic data, acquiring one or more user interactions with the visualization, generating a semantic query and a natural language interpretation based on the one or more user interactions, and presenting the semantic query and the natural language interpretation to a user for validation.

## Description

### Technical Field

This disclosure relates generally to information retrieval and more particularly to a system and method for enabling a user to perform a verifiable query on semantic data.

### Background

Information retrieval is an important aspect of an increasingly digital world. Several techniques exist to access and retrieve information from a digital data source. Typically, the process of information retrieval of unstructured data is triggered by a natural language query entered by a user. However, accessing and retrieving structured data (e.g., semantic data) from a huge and complex database (e.g., a resource description framework (RDF) database) requires a user to be well versed in specialized query languages (e.g., SPARQL protocol and RDF query language (SPARQL)). Thus, a user who does not know a semantic query language is limited in his ability to interact with the semantic systems. Further, even if the user is well versed in specialized information retrieval techniques and specialized query languages, it is cumbersome to make complex queries if the database is large in size and is also complex.

Currently, there are no, or only limited, deterministic techniques to enable the user to construct and conduct semantic systems queries without knowing semantic query languages or any programming languages for that matter. The current techniques are usually natural language based search techniques that may not be able to interpret the user's queries correctly every time.

It is therefore desirable to provide a technique for constructing and conducting semantic queries that would address the above issues. In particular, it is desirable to provide for a technique to interpret the user queries into a consistent, correct and unambiguous input for semantic systems.

### SUMMARY

In one embodiment, a method of performing verifiable query on semantic data is disclosed. In one example, the method comprises rendering, via a processor, a visualization of an ontology of the semantic data. The method further comprises acquiring, via the processor, one or more user interactions with the visualization. The method further comprises generating, via the processor, a semantic query and a natural language interpretation based on the one or more user interactions. The method further comprises presenting, via the processor, the semantic query and the natural language interpretation to a user for validation.

In one embodiment, the semantic data may be in resource description framework (RDF) format and the semantic query is in SPARQL protocol and RDF query language (SPARQL).

In one embodiment, a system for performing verifiable query on semantic data is disclosed. In one example, the system comprises at least one processor and a memory communicatively coupled to the at least one processor. The memory stores processor-executable instructions, which, on execution, cause the processor to render a visualization of an ontology of the semantic data. The processor-executable instructions, on execution, further cause the processor to acquire one or more user interactions with the visualization. The processor-executable instructions, on execution, further cause the processor to generate a semantic query and a natural language interpretation based on the one or more user interactions. The processor-executable instructions, on execution, further cause the processor to present the semantic query and the natural language interpretation to a user for validation.

In one embodiment, a non-transitory computer-readable medium storing computer-executable instructions for transforming an IT infrastructure is disclosed. In one example, the stored instructions, when executed by a processor, cause the processor to perform operations comprising rendering a visualization of an ontology of the semantic data. The operations further comprise acquiring one or more user interactions with the visualization. The operations further comprise generating a semantic query and a natural language interpretation based on the one or more user interactions. The operations further comprise presenting the semantic query and the natural language interpretation to a user for validation.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
**FIG. 1** is a block diagram of an exemplary system for performing verifiable query on semantic data in accordance with some embodiments of the present disclosure.
**FIG. 2** is a functional block diagram of a semantic query engine in accordance with some embodiments of the present disclosure.
**FIG. 3** is a flow diagram of an exemplary process for performing verifiable query on semantic data in accordance with some embodiments of the present disclosure.
**FIG. 4** is a flow diagram of a detailed exemplary process for performing verifiable query on semantic data in accordance with some embodiments of the present disclosure.
**FIG. 5** is a block diagram of an exemplary computer system for implementing embodiments consistent with the present disclosure.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

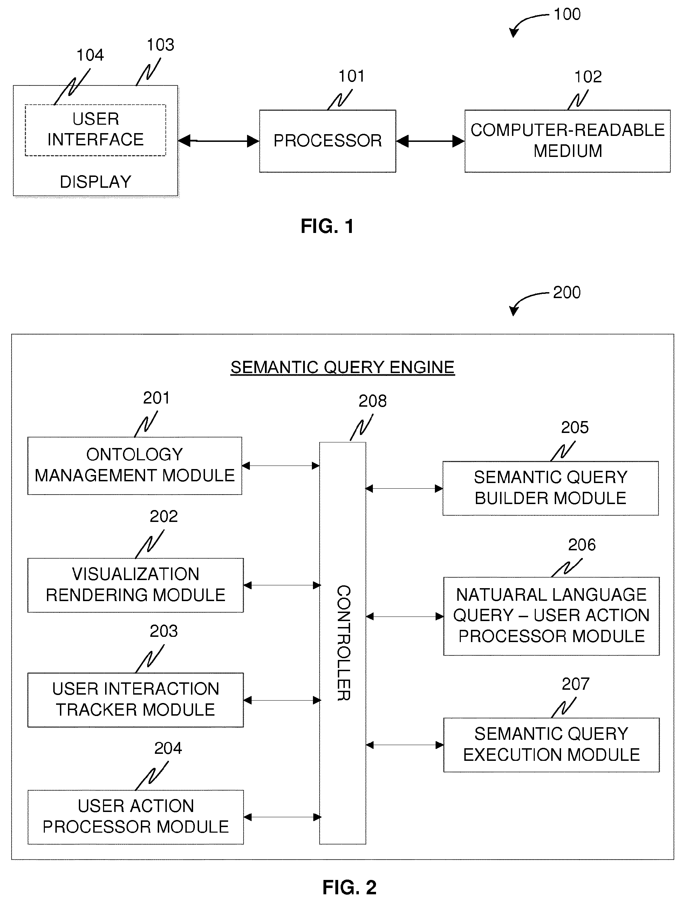

Referring now to FIG. 1, an exemplary system 100 for performing verifiable query on semantic data is illustrated in accordance with some embodiments of the present disclosure. In particular, the system 100 implements a semantic query engine for performing verifiable query on semantic data. The semantic query engine renders a visualization of an ontology of the semantic data, acquires one or more user interactions with the visualization, generates a semantic query and a natural language interpretation based on the one or more user interactions, and presents the semantic query and the natural language interpretation to a user for validation. The system 100 comprises one or more processors 101, a computer-readable medium (e.g., a memory) 102, and a display 103. The computer-readable medium 102 stores instructions that, when executed by the one or more processors 101, cause the one or more processors 101 to perform generation of verifiable query of semantic data in accordance with aspects of the present disclosure. The system 100 interacts with users via a user interface 104 accessible to the users via the display 103.

Referring now to FIG. 2, a functional block diagram of the semantic query engine 200 implemented by the system 100 of FIG. 1 is illustrated in accordance with some embodiments of the present disclosure. The semantic query engine 200 enable enterprise users to construct queries on semantic data without knowledge of any programming knowledge. The semantic query engine 200 renders a visualization of an ontology of the semantic data. The user can interact with the visualization and the semantic query engine 200 registers these interactions to generate a semantic query at the back end. A natural language interpretation of the semantic query is also generated for the end-user. The user can validate the semantic query based on the natural language interpretation. Alternatively, the user can modify at least a part of the natural language interpretation. The semantic query engine 200 registers these modifications to generate a modified semantic query at the back end and present it to the user for validation. The semantic query engine 200 further executes the validated semantic query and return results to the user. It should be noted that, in some embodiments, the semantic data is in resource description framework (RDF) format and the semantic query is in SPARQL protocol and RDF query language (SPARQL).

In some embodiments, the semantic query engine 200 comprises an ontology management module 201, a visualization rendering module 202, a user interaction tracker module 203, a user action processor module 204, a semantic query builder module 205, a natural language query - user action processor module 206, and a semantic query execution module 207 configured to perform specific functions. A controller 208 controls and communicates with each of the above mentioned modules 201-207. The controller 208 further interacts with a user and receives user inputs and provides output.

The ontology management module 201 manages ontologies of the semantic data. It loads, creates, updates, reads, and deletes ontologies on the semantic query engine 200. As will be appreciated by those skilled in the art, an ontology is an overall schema or metadata of a semantic web domain. In this way, the term 'ontology' may be understood to mean an interpretation of the semantic data. The ontology management module 201 enables an ontology, domain - taxonomy, or domain - model controlled and configured semantic query engine 200. Such a feature ensures that the semantic query engine 200 is highly configurable for an enterprise user. The controller 208 receives an initial input from the user to establish a concept of interest in the ontology. As will be appreciated by those skilled in the art, the concept of interest is a subject of interest about which the user wants to construct the query (e.g. person, organization, animal, and so forth). The ontology may thus include one or more concepts, or entities, a user would be able to identify from amongst other entities included in the data.

Once an ontology of a semantic data is loaded on the semantic query engine 200 and the concept of interest in the ontology been identified, the visualization rendering module 202 renders a visualization of the ontology. The term 'visualization' is used herein preferably to mean a visual, e.g. a graphical, equivalent to the data format or language of the ontology. The visualization may include one or more interaction elements to allow a user to input actions to the visualized ontology. In this way, no detailed knowledge of the language of the ontology is required by the user to interact with the ontology. A segmented view of the ontology based on the concept of interest is rendered. The ontology is rendered as partitioned tree graphs. Subsequently, the user interaction tracker module 203 tracks and captures various user interactions with the visualization. The user interaction tracker module 203 receives and processes different kinds of actions the user performs in the visualization. The different kinds of actions may include clicking on a data property node; clicking on an object property node; clicking on a super-class node; clicking on a sub-class node; modifying, adding, or deleting a sub-clause of the natural language interpretation; and so forth.

The user action processor module 204 receives the captured user actions as the input and processes them to reflect corresponding changes in the visualization, thereby deciding a future state of the visualization and to refine the data structure with respect to each of the captured user actions. For example, clicking on the data property node opens a pop-up to receive conditions for the data property. It also populates any conditions that are already assigned for the data property. Similarly, clicking on the object property node stores the path in the semantic query and shifts the visualization graph to give a 360 degree view of the concept that is the object of the object property. A 360 degree view of the concept renders the visualization graph around the edges of a particular concept. The visualization graph will show all the data properties, object properties, sub classes and super classes of the concept of interest. Additionally, clicking on the super class node stores the path in the semantic query and shifts the graph to give a 360 degree view of the super class concepts. Clicking on the sub class node stores the path in the semantic query and shifts the graph to give a 360 degree view of the sub class concepts. Further, modifying, adding, or deleting the sub-clause of the natural language interpretation processes the action using the natural language query - user action processor module 206.

The semantic query builder module 205 takes as input the complete path being maintained by the user action processor module 204 and navigates it to generate a semantic query as well as natural language interpretation of the path (e.g. find all persons, where name is like "Ram", has father an individual with name "Das"). The semantic query builder module 205 is capable of managing multiple data or object property conditions or constraints specified and is capable of handling super-class and sub-class constraints specified. Further, the user will be able to see a natural language rendition of the constructed query. It should be noted that the semantic query as well as the natural language interpretation are based on user interactions with the visualization. All the user interactions are captured in an internal data structure, and this data structure is processed to generate the natural language and the semantic query. Any changes done to the natural language query are also captured in this data structure. In some embodiments, the semantic query builder module 205 generates the semantic query by referring to a semantic query syntax database and mapping the one or more user interactions into a syntactically valid semantic query structure. Further, in some embodiments, the semantic query builder module 205 generates the natural language interpretation from the one or more user interactions by employing natural language generation algorithm. Alternatively, in some embodiments, the semantic query builder module 205 generates the natural language interpretation from the semantic query (generated based on the user interaction) using a semantic language parser (e.g., SPARQL language parser).

The natural language query - user action processor module 206 processes the action of modifying, adding, or deleting the sub-clause of the natural language interpretation performed by the user and changes the stored path in the semantic query. The modification, addition, or deletion of sub-clauses of the natural language interpretation will result in corresponding modification of the semantic query constructed by the semantic query builder module 205. The semantic query execution module 207 receives the semantic query generated by the semantic query builder module 205 as input, executes the semantic query on the semantic data store, and return results of query execution.

It should be noted that the semantic query engine 200 may be implemented in programmable hardware devices such as programmable gate arrays, programmable array logic, programmable logic devices, and so forth. Alternatively, the semantic query engine 200 may be implemented in software for execution by various types of processors. An identified engine of executable code may, for instance, comprise one or more physical or logical blocks of computer instructions which may, for instance, be organized as an object, procedure, function, module, or other construct. Nevertheless, the executables of an identified engine need not be physically located together, but may comprise disparate instructions stored in different locations which, when joined logically together, comprise the engine and achieve the stated purpose of the engine. Indeed, an engine of executable code could be a single instruction, or many instructions, and may even be distributed over several different code segments, among different applications, and across several memory devices.

As will be appreciated by one skilled in the art, a variety of processes may be employed for performing a verifiable query on semantic data. For example, the exemplary system 100 and the associated semantic query engine 200 may perform verifiable query on semantic data by the processes discussed herein. In particular, as will be appreciated by those of ordinary skill in the art, control logic and/or automated routines for performing the techniques and steps described herein may be implemented by the system 100 and the associated semantic query engine 200, either by hardware, software, or combinations of hardware and software. For example, suitable code may be accessed and executed by the one or more processors on the system 100 to perform some or all of the techniques described herein. Similarly, application specific integrated circuits (ASICs) configured to perform some or all of the processes described herein may be included in the one or more processors on the system 100.

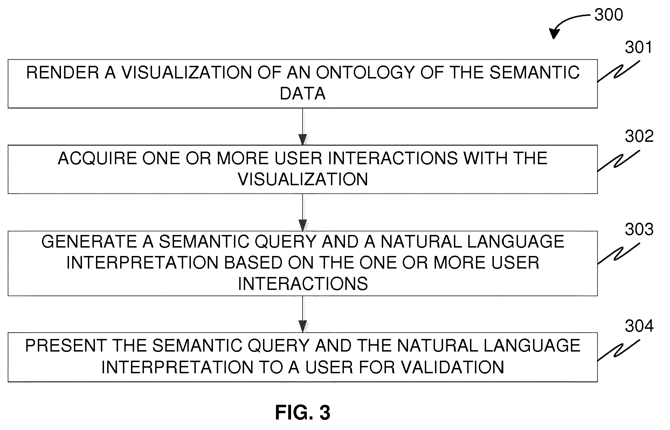

For example, referring now to FIG. 3, exemplary control logic 300 for performing verifiable query on semantic data via a system, such as system 100, is depicted via a flowchart in accordance with some embodiments of the present disclosure. As illustrated in the flowchart, the control logic 300 includes the steps of rendering a visualization of an ontology of the semantic data at step 301, acquiring one or more user interactions with the visualization at step 302, generating a semantic query and a natural language interpretation based on the one or more user interactions at step 303, and displaying the semantic query and the natural language interpretation to a user for validation at step 304. In some embodiments, the control logic 300 further includes the step of loading the ontology of the semantic data. Additionally, in some embodiments, the control logic 300 includes the steps of capturing a modification performed by the user to the natural language interpretation and generating a modified semantic query based on the modification performed. Further, in some embodiments, the control logic 300 includes the steps of executing the semantic query on the semantic data and returning corresponding results.

In some embodiments, rendering the visualization at step 301 further comprises receiving a concept of interest of the ontology from the user, and rendering a segmented view of the ontology based on the concept of interest. Additionally, in some embodiments, acquiring the one or more user interactions at step 302 further comprises, for each interaction, receiving an action performed by the user in the visualization, and processing the action performed by the user. As noted above, the actions may include clicking on a data property node; clicking on an object property node; clicking on a super-class node; clicking on a sub-class node; modifying, adding, or deleting a sub-clause of the natural language interpretation; and so forth. Further, in some embodiments, generating the semantic query at step 303 further comprises referring to a semantic query syntax database, and mapping the one or more user interactions into a syntactically valid semantic query structure. Moreover, in some embodiments, generating the natural language interpretation at step 303 comprises generating the natural language interpretation from the one or more user interactions by employing natural language generation algorithm. Alternatively, in some embodiments, generating the natural language interpretation at step 303 comprises generating the natural language interpretation from the semantic query.

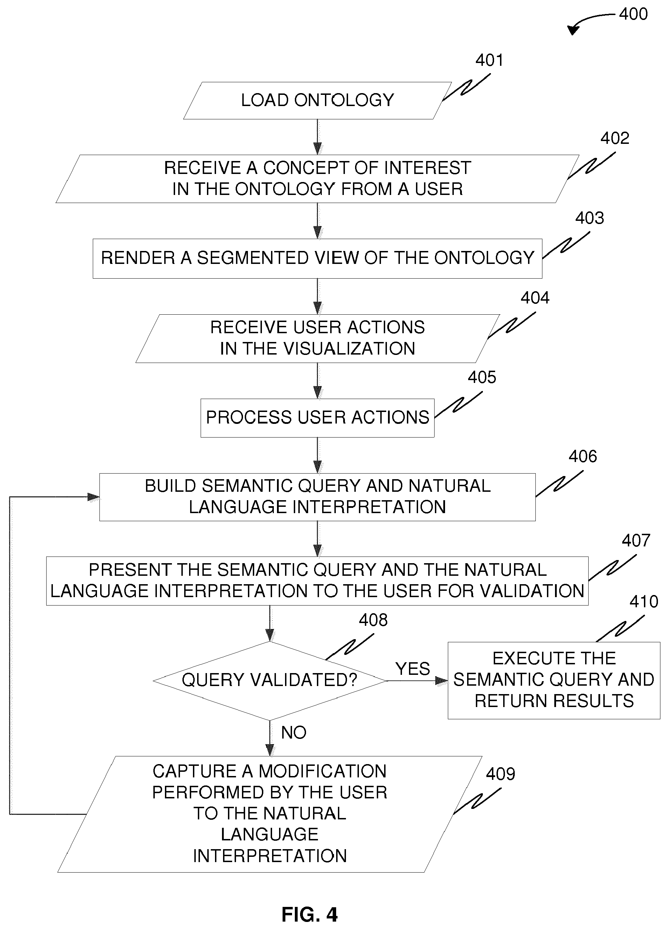

Referring now to FIG. 4, exemplary control logic 400 for performing verifiable query on semantic data is depicted in greater detail via a flowchart in accordance with some embodiments of the present disclosure. As illustrated in the flowchart, the control logic 400 includes the steps of loading an ontology of a semantic data to be used at step 401, receiving a concept of interest in the ontology from a user at step 402, rendering a segmented view of the ontology with respect to the concept of interest at step 403, receiving user actions in the visualization at step 404, and processing each of the user actions based on the type of action at step 405.

The control logic 400 further includes the step of building a semantic query and a natural language interpretation of the semantic query upon an indication by the user at step 406. It should be noted that the generated natural language interpretation may be edited or modified by the user (through deleting sub-clauses). In some embodiments, the indication may include a construct query signal given by the user from the visualization. Alternatively, the indication may include a pause for a certain length of time or a voice command. Alternatively, the semantic query and the natural language interpretation is generated on-the-fly as the user goes on interacting with visualization. The control logic 400 further includes the step of presenting the semantic query and the natural language interpretation to the user for validation at step 407. If the user validates the semantic query at step 408, the control logic 400 proceeds to the step of executing the semantic query over a semantic data store and returning the results of execution at step 409. However, if the user does not validate the semantic query at step 408 and modifies the natural language interpretation, the control logic 400 further includes the step of capturing and processing any such modification or alterations performed by the user to the natural language interpretation at step 410. The control logic 400 then flows back to the step 406 where a modified semantic query is generated based on the modification performed by the user to the natural language interpretation. The modified semantic query is then presented for validation and the process iterates till the user is satisfied with the generated semantic query.

As will be also appreciated, the above described techniques may take the form of computer or controller implemented processes and apparatuses for practicing those processes. The disclosure can also be embodied in the form of computer program code containing instructions embodied in tangible media, such as floppy diskettes, CD-ROMs, hard drives, or any other computer-readable storage medium, wherein, when the computer program code is loaded into and executed by a computer or controller, the computer becomes an apparatus for practicing the invention. The disclosure may also be embodied in the form of computer program code or signal, for example, whether stored in a storage medium, loaded into and/or executed by a computer or controller, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

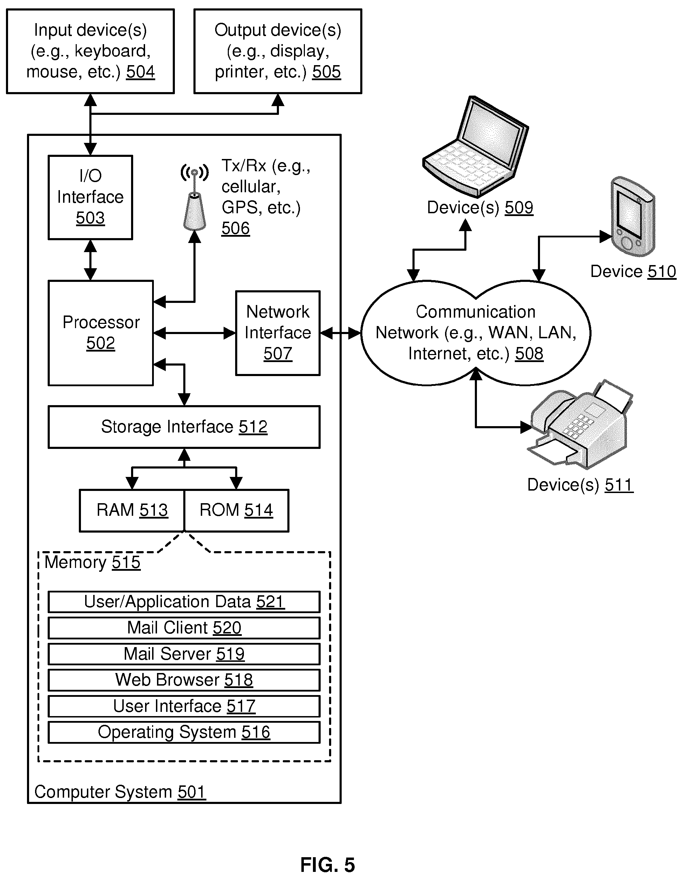

The disclosed methods and systems may be implemented on a conventional or a general-purpose computer system, such as a personal computer (PC) or server computer. Referring now to FIG. 5, a block diagram of an exemplary computer system 501 for implementing embodiments consistent with the present disclosure is illustrated. Variations of computer system 501 may be used for implementing system 100 and semantic query engine 200 for performing verifiable query on semantic data. Computer system 501 may comprise a central processing unit ("CPU" or "processor") 502. Processor 502 may comprise at least one data processor for executing program components for executing user- or system-generated requests. A user may include a person, a person using a device such as such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. The processor 502 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 502 may be disposed in communication with one or more input/output (I/O) devices via I/O interface 503. The I/O interface 503 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 503, the computer system 501 may communicate with one or more I/O devices. For example, the input device 504 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. Output device 505 may be a printer, fax machine, video display (e.g., cathode ray tube (CRT), liquid crystal display (LCD), light-emitting diode (LED), plasma, or the like), audio speaker, etc. In some embodiments, a transceiver 506 may be disposed in connection with the processor 502. The transceiver may facilitate various types of wireless transmission or reception. For example, the transceiver may include an antenna operatively connected to a transceiver chip (e.g., Texas Instruments WiLink WL1283, Broadcom BCM4750IUB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, the processor 502 may be disposed in communication with a communication network 508 via a network interface 507. The network interface 507 may communicate with the communication network 508. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 508 may include, without limitation, a direct interconnection, local area network (LAN), wide area network (WAN), wireless network (e.g., using Wireless Application Protocol), the Internet, etc. Using the network interface 507 and the communication network 508, the computer system 501 may communicate with devices 509, 510, and 511. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 501 may itself embody one or more of these devices.

In some embodiments, the processor 502 may be disposed in communication with one or more memory devices (e.g., RAM 513, ROM 514, etc.) via a storage interface 512. The storage interface may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

The memory devices may store a collection of program or database components, including, without limitation, an operating system 516, user interface application 517, web browser 518, mail server 519, mail client 520, user/application data 521 (e.g., any data variables or data records discussed in this disclosure), etc. The operating system 516 may facilitate resource management and operation of the computer system 501. Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 517 may facilitate display, execution, interaction, manipulation, or operation of program components through textual or graphical facilities. For example, user interfaces may provide computer interaction interface elements on a display system operatively connected to the computer system 501, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system 501 may implement a web browser 518 stored program component. The web browser may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system 501 may implement a mail server 519 stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, the computer system 501 may implement a mail client 520 stored program component. The mail client may be a mail viewing application, such as Apple Mail, Microsoft Entourage, Microsoft Outlook, Mozilla Thunderbird, etc.

In some embodiments, computer system 501 may store user/application data 521, such as the data, variables, records, etc. (e.g., ontology, concept of interest, user actions, semantic query, natural language interpretation, and so forth) as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of the any computer or database component may be combined, consolidated, or distributed in any working combination.

As will be appreciated by those skilled in the art, the techniques described in the various embodiments discussed above enable business users (non-programmers) to construct verifiable semantic queries without any need for the knowledge of the query language or any other programming language. The techniques build and maintain the path traversed by the end-user in the ontology (visual graph representation) of the semantic data which is presented to the user enabling the user to form a query without any need to know the syntax of underlying semantic query language. The techniques then traverse this path to build semantic query as well as a natural language interpretation. The natural language interpretation created may be edited by the end-user (e.g., sub-clauses can be deleted), which would modify the internal stored path and in turn the semantic query. The end-user may then verify the query constructed by the techniques through inspection of the generated natural language interpretation of the traversed path. Thus, a verified semantic query gets constructed and may be executed without the need for the user to know the syntax of semantic query language.

Additionally, the techniques, described in the various embodiments discussed above, are deterministic techniques resulting in high accurate semantic query. The techniques allow for processing of complex and lengthy ontologies in graphical manner. Further, the techniques enable user to see a natural language interpretation of the semantic query generated. The techniques enable the end-user to modify specific clauses from the natural language interpretation and the modification is reflected in the semantic query as well. The functional testers can therefore employ the technique to generate semantic queries for testing or information retrieval purposes. Similarly, developers can employ the technique to construct semantic queries for use in projects. Additionally, end-user can verify the query constructed by the described techniques through inspection of the generated natural language interpretation of the traversed path.

The specification has described system and method for performing verifiable query on semantic data. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method of performing a verifiable query on semantic data, the method comprising:
rendering a visualization of an ontology of the semantic data;
acquiring one or more user interactions with the visualization;
generating a semantic query and a natural language interpretation based on the one or more user interactions; and
presenting the semantic query and the natural language interpretation to a user for validation.

2. The method of claim 1, wherein rendering the visualization further comprises:
receiving a concept of interest in the ontology from the user; and
rendering a segmented view of the ontology based on the concept of interest.

3. The method of claim 1 or claim 2, wherein acquiring the one or more user interactions comprises, for each interaction:
receiving an action performed by the user in the visualization; and
processing the action performed by the user.

4. The method of claim 3, wherein the action comprises at least one of clicking on a data property node, clicking on an object property node, clicking on a super-class node, clicking on a sub-class node, and deleting a sub-clause of the natural language interpretation.

5. The method of any preceding claim, wherein generating the semantic query comprises:
referring to a semantic query syntax database; and
mapping the one or more user interactions into a syntactically valid semantic query structure.

6. The method of any preceding claim, wherein generating the natural language interpretation comprises generating the natural language interpretation from the one or more user interactions by employing a natural language generation algorithm.

7. The method of any one of claims 1 to 5, wherein generating the natural language interpretation comprises generating the natural language interpretation from the semantic query.

8. The method of any preceding claim, further comprising:
capturing a modification performed by the user to the natural language interpretation; and
generating a modified semantic query based on the modification performed.

9. The method of any preceding claim, wherein the semantic data is in resource description framework format and the semantic query is in protocol and resource description framework query language.

10. A system for performing verifiable query on semantic data, the system comprising:
at least one processor; and
a computer-readable medium storing instructions that, when executed by the at least one processor, cause the at least one processor to perform the method of any preceding claim.

11. A non-transitory computer-readable medium storing computer-executable instructions for performing the method of any one of claims 1 to 9.
